# EUROPEAN PATENT SPECIFICATION

(11) **EP 0 623 418 B1**
(45) Date of publication and mention of the grant of the patent: **10.09.1997**
(21) Application number: 94102292.3
(22) Date of filing: 15.02.1994
(51) Int. Cl.: B23P 19/00, B25B 11/00, B65D 5/50, B25H 3/00, B25H 3/04

(54) **Holder for hinges particularly of the anuba type**
Behälter für Scharniere insbesondere des Anuba-Typs
Support pour charnières en particulier du type anuba

(30) Priority: 23.03.1993 IT TV930033
(43) Date of publication of application: 09.11.1994
(73) Proprietor: OTLAV S.p.A., 31025 Sarano di S. Lucia di Piave (Treviso) (IT)
(72) Inventor: De Franco, Mario, I-31020 Villorba (Treviso) (IT)
(74) Representative: Modiano, Guido, Dr.-Ing.

(56) References cited:
- FR-A- 970 305
- FR-A- 988 697
- FR-A- 2 583 330
- GB-A- 767 831
- US-A- 3 773 214
- US-A- 4 326 628

## Description

The present invention relates to a holder for hinges, particularly hinges of the so-called "Anuba" type that are accordingly constituted by a male element and by a female element which each have a threaded stem.

These known hinges are currently installed in the casement mainly with automatic machines termed Anuba hinge drivers.

These hinge drivers insert, by means of screwer chucks, the threaded stem of the male or female element at an adapted hole formed in the casement.

These hinge drivers remove the male or female element from a magazine which must be pre-loaded by the operator by inserting the individual male or female elements so that they are mutually superimposed and pre-orientated so that in said magazine the threaded hinge stems protrude externally so that they can be gripped by the screwer chucks.

A problem that currently arises in the known art is the loading of the magazine with the hinges so as to pre-orientate them.

As a partial solution to the drawback of having to manually insert the hinges one by one, the same Applicant devised the use of a rectangular piece of cardboard on which multiple separate holes are formed beforehand in sequence; the threaded stems of a number of male or female elements are inserted at these holes, and said elements are thus pre-orientated and sequentially ordered.

The operator then inserts the bodies of the male or female hinge at an adapted slot formed in the magazine of Anuba hinge drivers and then tears the cardboard.

However, this solution has considerable drawbacks that reduce and penalize its use: the male or female elements pre-inserted at the piece of cardboard lose their alignment, since the cardboard is not rigid and the body of the hinges tends to rotate with respect to the hole in which the threaded stem is inserted.

This entails the presence of an operator who continuously manually realigns the hinges, thus making it pointless to load said hinges since such loading is again comparable to individual manual loading in terms of time wasted.

Furthermore, the rectangular piece of cardboard is difficult to handle due to its flexibility and tendency to yield easily, and it can tear or the hinges can slip out of their holes.

An increase in the thickness of the cardboard is not feasible, since it would become more difficult to tear it once the hinge bodies have been inserted in the Anuba hinge driver.

Finally, attention is drawn to the fact that it is necessary to provide pieces of cardboard with suitable and different holes according to each diameter of the threaded stem of the hinges, thus creating problems of storage and of choice, on the part of the operator, of the piece of cardboard according to the hinges to be loaded.

FR-A-988 697 discloses a packaging container for holding pharmaceutical ampoules including a folded cardboard sheet having angled walls with holes provided therein for supporting essentially cylindrical portions of the ampoules, and FR-A-970 305 discloses a two-part system packaging insert for holding bottles and including a folded cardboard sheet having angled walls with holes provided therein for supporting the cylindrical neck and base portions respectively, of the bottles when arranged in a container.

An aim of the present invention is therefore to solve the described technical problems, eliminating the drawbacks of the known art and thus providing an invention that allows the pre-orientated and sorted loading of Anuba-type hinges to be associated at an adapted magazine of an Anuba hinge driver.

Within the scope of the above aim, an important object is to provide an invention that allows to temporarily store even a large number of Anuba-type hinges so that they are correctly pre-orientated.

Another important object is to provide an invention in which it is possible to arrange, in an orderly and pre-orientated manner, a given number of Anuba-type hinges even if they have threaded stems with mutually different diameters.

Another object is to provide an invention that allows to keep the hinges aligned even after handling on the part of the user and thus, for example, during the loading of the Anuba hinge driver.

Another important object is to provide an invention that is reliable and safe in use and has modest manufacturing costs.

With these and other objects in view, there is provided, according to the present invention, a holder for hinges as defined in the appended claim 1. Further embodiments are defined in the subclaims.

Further characteristics and advantages of the present invention will become apparent from the following detailed description of a particular but not exclusive embodiment thereof, illustrated only by way of non-limitative example in the accompanying drawings, wherein:
figure 1 is a partially sectional lateral perspective view of the holder;
figure 2 is a top view of the holder;
figure 3 is a sectional view, taken along the plane III-III of figure 2;
figure 4 is a view of the holder laid out flat.

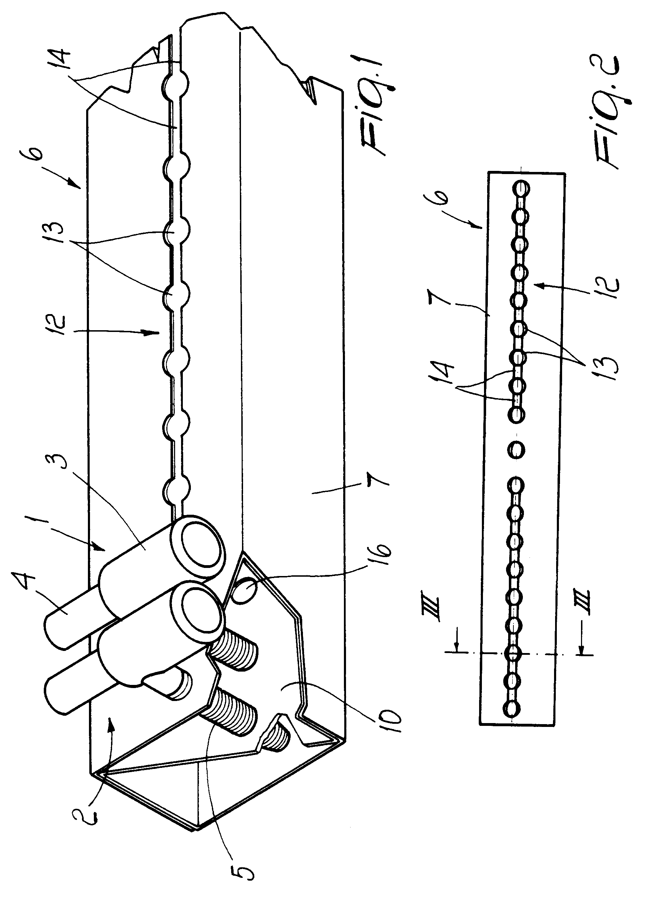

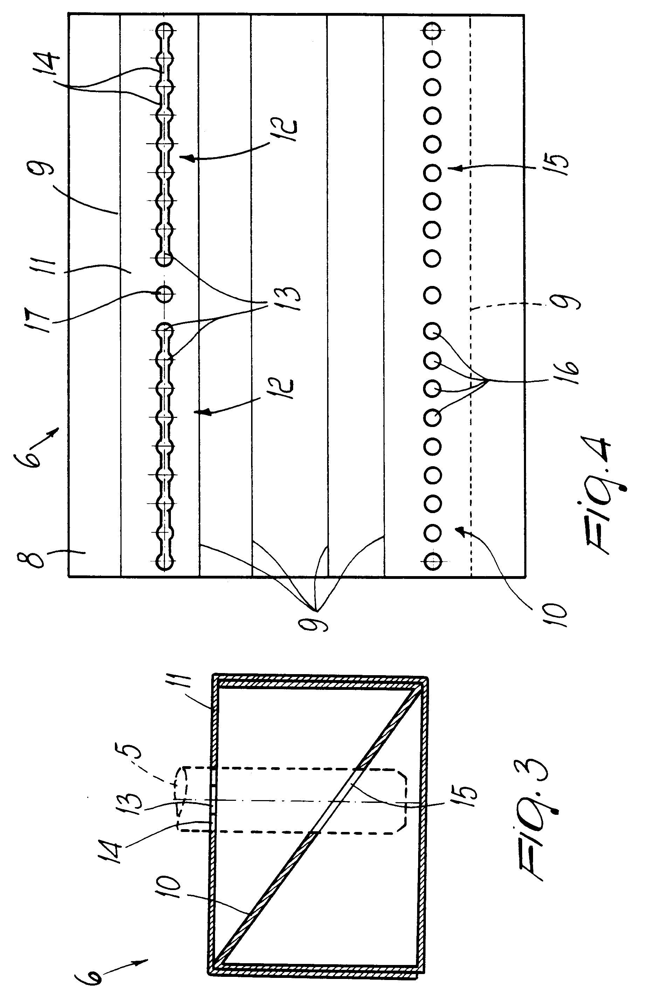

With reference to the above figures, the reference numeral 1 designates an Anuba-type hinge which is thus constituted by a male element 2 or a female element which have an essentially cylindrical body 3 from which an adapted pivot 4 protrudes or within which an adapted seat is formed, a threaded stem 5 protruding radially from said seat.

The reference numeral 6 designates the holder for the hinges 1, which is constituted by a support 7 preferably made of pressboard.

Said support 7 is obtained starting from a flat rectangular sheet 8 on which six longitudinal creases 9 are formed; the sheet is then folded so as to assume a parallelepipedal shape with a diagonally arranged internal surface 10.

One or more first seats 12, constituted by first holes 13 mutually connected by adapted slots 14, are formed at a lateral surface 11.

The spacing between the first holes 13 may also be uneven.

Second seats 15 are formed at the internal surface 10, which is arranged along the diagonal of the support 7; said second seats are formed by separate second holes 16 which are arranged along the same axis as the first holes 13.

The diameter of the second holes 16 may not coincide with that of the first holes 13: the first seats 12 in fact form guiding means for the insertion of the stem 5 of the hinge 1, whereas the second seats 15 constitute means for temporarily locking said stem 5.

The particular embodiment provides two sequences of first seats 12, spaced by a third hole 17 which can be used to allow compensation of the bodies 3 of the hinges 1 if they have slightly different dimensions, also according to the intended diameter of the stems 5.

The arrangement of the second seats 15 at the inclined internal surface 10 allows to engage the threaded stem 5 once the user has inserted it, and the body 3 remains correctly orientated by virtue of the first seats 12.

Said seats 12 thus keep the hinge in position, so that the holder 6 can be easily handled by the user until the bodies of the hinges are loaded into the magazine of the Anuba hinge driver, subsequently tearing the support 7 so as to release the stems 5.

It has thus been observed that the invention has achieved the intended aim and objects, a holder for Anuba-type hinges having been provided that allows the user, with a rapid and easy operation, to pre-orientate a desired number of hinges, said hinges being kept in an orderly condition even after handling on the part of the user.

This holder, in addition to keeping the hinge body in the correct position, allows to perform loading in an equally rapid and easy manner at the magazine of the Anuba hinge drivers; the support is then subsequently easily removable.

The invention is furthermore structurally very simple and easy to produce, and has modest manufacturing costs.

The invention is naturally susceptible to numerous modifications and variations, all of which are within the scope of the claims.

The materials and the arrangement of the individual components of the invention, as well as the materials that constitute it, may naturally be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A holder (6) for holding in an aligned manner a plurality of hinges (1) each with a threaded stem (5), in particular hinges of the Anuba type, the holder comprising:
a support (7) having a lateral surface (11) and an internal surface (10) which is spaced from said lateral surface (11);
at least one series of first holes (13) provided through said lateral surface (11) such that the stems (5) of the hinges (1) may be inserted through and supported by said first holes (13);
at least one series of slots (14) also provided through said lateral surface (11) and extending between the first holes (13) for mutually interconnecting said first holes (13);
at least one series of second holes (16) provided through said internal surface (10) and being axially aligned with said first holes (13) such that the ends of the stems (5) of the hinges (1) may be inserted into and supported by the second holes (16) simultaneously when said stems are inserted through and supported by said first holes (13).

2. Holder according to claim 1, characterized in that said support (7) is constituted by a rectangular sheet (8) of pressboard on which at least six creases (9) and/or pre-punched folding lines are formed, said sheet (8) being folded so as to assume an essentially parallelepipedal shape in which at least said internal surface (10) is arranged diagonally with respect to said lateral surface (11).

3. Holder according to any one or more of claims 1 and 2, characterized in that at least two sequences of said series of first holes (13) mutually interconnected by said series of slots (14) are provided in said lateral surface (11).

4. Holder according to claim 3, characterized in that two sequences of said series of first holes (13) mutually interconnected by said series of slots (14) are spaced by a third hole (17) suitable to compensate for the different spacing of said first holes (13) or for the different diameter of the bodies (3) of said hinges (1).

5. Holder according to any one or more of the preceding claims, characterized in that said first (13) and second (16) holes have different diameters.

6. Holder according to any one or more of the preceding claims, characterized in that said first seats (12) form guiding means for the insertion of the threaded stem (5) of said hinges (1) and for keeping the body of said hinges in the intended prearranged order.

7. Holder according to any one or more of the preceding claims, characterized in that said second seats (15) form means for the temporary snap-action locking of the threaded stem (5) of said hinges (1).

## Patentansprüche

1. Halter (6) zum ausgerichteten Halten einer Vielzahl von Scharnieren (1) jeweils mit einem Gewindebolzen (5), insbesondere Scharniere des Typs "Anuba", mit:
einer Aufnahme (7) mit einer seitlichen Oberfläche (11) und einer inneren Fläche (10), die von der seitlichen Fläche (11) beabstandet ist;
zumindest einer Reihe von ersten Bohrungen (13), die sich durch die Seitenfläche (11) so hindurchstrecken, daß die Gewindebolzen (5) der Scharniere (1) hindurchgeführt werden können und von den ersten Bohrungen (13) gehalten werden;
zumindest einer Reihe von Schlitzen (14), die ebenfalls in der seitlichen Fläche (11) angeordnet sind und sich zwischen den ersten Bohrungen (13) erstrecken, so daß diese untereinander verbunden werden;
zumindest einer Reihe von zweiten Bohrungen (16), die in der inneren Fläche (10) angeordnet sind und axial mit den ersten Bohrungen (13) ausgerichtet sind, so daß die Enden der Gewindebolzen (5) der Scharniere (1) in die zweiten Bohrungen (16) zugleich mit den ersten Bohrungen (13) eingeführt und in diesen gehalten werden können.

2. Halter nach Anspruch 1, dadurch gekennzeichnet, daß die Aufnahme (7) aus einem rechteckförmigen Zuschnitt (8) aus Preßpappe besteht, auf der zumindest sechs Falten (9) und/oder vorgestanzte Falzlinien ausgebildet sind, wobei der Zuschnitt (8) so gefaltet wird, daß er im wesentlichen die Form eines Quaders annimmt, wobei zumindest die innere Fläche (10) diagonal im Hinblick auf die Seitenfläche (11) angeordnet ist.

3. Halter nach einem oder mehreren der Ansprüche 1 und 2, dadurch gekennzeichnet, daß zumindest zwei Einzelreihen von Reihen an ersten Bohrungen (13) untereinander durch eine Reihe von Schlitzen (14) verbunden und auf der Seitenfläche (11) angeordnet sind.

4. Halter nach Anspruch 3, dadurch gekennzeichnet, daß zwei Einzelreihen von Reihen erster Bohrungen (13) untereinander durch Reihen von Schlitzen (14) verbunden und durch eine dritte Bohrung (17) beabstandet sind, die geeignet ist, unterschiedliche Abstände der ersten Bohrungen (13) oder unterschiedliche Durchmesser der Grundkörper (3) der Scharniere (1) auszugleichen.

5. Halter nach einem oder mehreren der vorhergehenden Ansprüche, dadurch gekennzeichnet, daß die genannten ersten (13) und zweiten (16) Bohrungen unterschiedliche Durchmesser aufweisen.

6. Halter nach einem oder mehreren der vorhergehenden Ansprüche, dadurch gekennzeichnet, daß die genannten ersten Sitze (12) Führungsmittel zum Einführen des Gewindebolzens (5) der Scharniere (1) bilden sowie zum Halten des Körpers der Scharniere in der gewollten ausgerichteten Lage.

7. Halter nach einem oder mehreren der vorhergehenden Ansprüche, dadurch gekennzeichnet, daß die genannten zweiten Sitze (15) Mittel zum zeitweisen, einschnappenden Festlegen der Gewindebolzen (5) der Scharniere (1) bilden.

## Revendications

1. Support (6) pour maintenir d'une manière alignée une pluralité de charnières (1), chacune ayant une tige filetée (5), en particulier des charnières du type Anuba, le support comprenant :
- un support (7) ayant une surface latérale (11) et une surface interne (10) qui est espacée de ladite surface latérale (11) ;
- au moins une série de premiers trous (13) prévus à travers ladite surface latérale (11) de sorte que les tiges (5) des charnières (1) peuvent être insérées à travers lesdits premiers trous (13) et supportées par ceux-ci ;
- au moins une série de fentes (14) également prévues à travers ladite surface latérale (11) et s'étendant entre les premiers trous (13) pour interconnecter mutuellement lesdits premiers trous (13) ;
- au moins une série de seconds trous (16) prévus à travers ladite surface interne (10) et étant axialement alignés avec lesdits premiers trous (13) de sorte que les extrémités des tiges (5) des charnières (1) peuvent être insérées dans les seconds trous (16) et supportées par ceux-ci, simultanément, quand lesdites tiges sont insérées à travers lesdits premiers trous (13) et supportées par ceux-ci.

2. Support selon la revendication 1,
caractérisé en ce que ledit support (7) est constitué par une feuille rectangulaire (8) de matière rigide sur laquelle au moins six plis (9) et/ou lignes de pliage préformés sont prévus, ladite feuille (8) étant pliée de façon à prendre une forme sensiblement parallélépipèdique dans laquelle au moins ladite surface interne (10) est agencée diagonalement par rapport à ladite surface latérale (11).

3. Support selon une ou plusieurs des revendications 1 et 2,
caractérisé en ce qu'au moins deux séquences de ladite série de premiers trous (13) mutuellement interconnectés par ladite série de fentes (14) sont prévues sur ladite surface latérale (11).

4. Support selon la revendication 3,
caractérisé en ce que deux séquences de ladite série de premiers trous (13) mutuellement interconnectés par ladite série de fentes (14) sont espacées par un troisième trou (17) approprié pour compenser l'écartement différent desdits premiers trous (13) ou le diamètre différent des corps (3) desdites charnières (1).

5. Support selon une ou plusieurs des revendications précédentes,
caractérisé en ce que lesdits premiers (13) et seconds (16) trous ont des diamètres différents.

6. Support selon une ou plusieurs des revendications précédentes,
caractérisé en ce que lesdits premiers sièges (12) forment des moyens de guidage pour l'insertion de la tige filetée (5) desdites charnières (1) et pour maintenir le corps desdites charnières dans l'ordre préagencé souhaité.

7. Support selon une ou plusieurs des revendications précédentes,
caractérisé en ce que lesdits seconds sièges (15) forment des moyens pour le verrouillage à pression temporaire de la tige filetée (5) desdites charnières (1).
